# EUROPÄISCHE PATENTSCHRIFT

(11) **EP 3 131 447 B1**
(45) Veröffentlichungstag und Bekanntmachung des Hinweises auf die Patenterteilung: **06.06.2018**
(21) Anmeldenummer: 15724167.0
(22) Anmeldetag: 15.04.2015
(51) Int. Cl.: A47J 31/36, A47J 31/42

(54) **BRÜHEINHEIT FÜR EINE KAFFEEMASCHINE SOWIE KAFFEEMASCHINE**
BREWING UNIT FOR A COFFEE MACHINE AND COFFEE MACHINE
UNITÉ D'ÉCHAUDAGE POUR UNE MACHINE À CAFÉ, AINSI QUE MACHINE À CAFÉ

(30) Priorität: 15.04.2014 EP 14405034
(43) Veröffentlichungstag der Anmeldung: 22.02.2017
(73) Patentinhaber: JURA Elektroapparate AG, 4626 Niederbuchsiten (CH)
(72) Erfinder: BÜTTIKER, Philipp, CH-4625 Oberbuchsiten (CH); SAHLI, Georg, CH-3423 Ersigen (CH); ULLMANN, Erich, CH-4622 Egerkingen (CH); PROBST, Stephan, CH-4553 Subingen (CH)
(74) Vertreter: EGLI-EUROPEAN PATENT ATTORNEYS
(86) Internationale Anmeldenummer: PCT/CH2015/000057
(87) Internationale Veröffentlichungsnummer: WO 2015/157872

(56) Entgegenhaltungen:
- EP-A1- 2 229 848
- DE-A1- 1 903 859

## Beschreibung

Die vorliegende Erfindung betrifft eine Brüheinheit für eine Kaffeemaschine sowie eine Kaffeemaschine.

Aus der Technik bekannte Kaffeemaschinen weisen eine Vielzahl von Baugruppen auf, welche automatisiert oder automatisierbar derart zusammenwirken, dass ein automatischer Bezug von frisch gebrühten Heissgetränken, in der Regel Kaffeegetränken oder Kaffeemischgetränken, mit minimierter Benutzerinteraktion möglich ist.

Zu diesem Zweck weisen aus dem Stand der Technik bekannte Kaffeemaschinen in der Regel eine sogenannte Brüheinheit auf, welche ihrerseits wiederum eine mit Mahlgut, in der Regel mit gemahlenem Kaffeepulver befüllbare Brühkammer aufweist. Nach dem Einfüllen des Mahlgutes können Teile einer derartigen Brüheinheit derart verschwenkt werden, dass das eingefüllte Mahlgut komprimiert und durch Einleiten von Brühwasser von diesem derart durchsetzt wird, dass ausgangsseitig aus der Brüheinheit das gebrühte Heissgetränk bezogen werden kann. In der Regel erfolgt anschliessend ein automatischer Auswurf des Mahlgutkomprimats (Kaffeekuchens) durch Bewegung weiterer Teile der Brüheinheit.

Gängige Kaffeemaschinen zeichnen sich nun darüber hinaus dadurch aus, dass sie ferner ein Mahlwerk aufweisen, welches eingangsseitig mit ungemahlenen gerösteten Kaffeebohnen befüllbar ist, und welches ausgangsseitig für den Bezug eines Kaffeeheissgetränkes der Brüheinheit, genauer gesagt der Brühkammer der Brüheinheit, durch Zermahlen der Kaffeebohnen gewonnenes Mahlgut mit dem gewünschten Mahlgrad und in der gewünschten Menge zuführen kann. Zu diesem Zweck kann beispielsweise ein Brühzylinder, der die Brühkammer aufweist, innerhalb der Brüheinheit zum Durchführen des Befüllvorganges derart schwenkbar sein, dass eine Öffnung der Brühkammer unterhalb des Mahlwerkausgangs angeordnet ist, sodass gemahlenes Kaffeepulver aus dem Mahlwerkausgang durch die Öffnung (im Folgenden "Befüllöffnung") in die Brühkammer der Brüheinheit fallen kann.

Aus der EP 0 559 620 A1 ist beispielsweise eine Brüheinheit für eine Kaffeemaschine bekannt, welche einen schwenkbaren Brühzylinder der vorstehend genannten Art umfasst, wobei der Brühzylinder zum Befüllen der Brühkammer mit Kaffeepulver in eine Lage schwenkbar ist, in welcher die Befüllöffnung der Brüheinheit unterhalb einer Ausgabeöffnung eines Mahltrichters, der zur Aufnahme des mittels eines Mahlwerks erzeugten Mahlguts (Kaffeepulver) dient, angeordnet ist, sodass Mahlgut aus der Ausgabeöffnung des Mahltrichters durch die Befüllöffnung rieseln kann.

Aufgrund elektrostatischer Aufladung des Mahlgutes während des Mahlvorganges sowie aufgrund anderer möglicher störender Effekte zeigt sich nun bei den herkömmlichen Brüheinheiten, beispielsweise bei der Brüheinheit, welche aus der EP 0 559 620 A1 oder der EP 2 229 848 A1 bekannt ist, der unerwünschte Effekt, dass während des Befüllvorganges die einzelnen Pulverkörner des Mahlgutes teilweise nicht durch die Befüllöffnung der Brühkammer in diese hineinrieseln, sondern infolge der elektrostatischen Ladung auf der Oberseite der Brüheinheit verstreut werden. Insbesondere dann, wenn die Brühkammer mit einer grossen Pulvermenge, beispielsweise mit dem maximalen Fassungsvermögen an Pulver, befüllt werden soll, ergibt sich eine unerwünschte grosse Verteilung der einzelnen Pulverkörner auf der Oberseite der Brüheinheit.

Eine derartige Ablagerung der Pulverkörner auf der Oberseite der Brüheinheit führt infolge des warm-feuchten Klimas beim Kaffeebezug an diesen Stellen der Brüheinheit zu hygienischen Problemen.

DE 19 03 859 A1 offenbart eine Maschine zur Zubereitung von Kaffeeaufgüssen, welche eine bewegliche Platte 11 umfasst, die ein durchgehendes Loch 20 zur Aufnahme einer für die Zubereitung eines Kaffeeaufgusses bestimmten frischen Kaffeepulvermenge aufweist und derart beweglich ist, dass sie in zwei verschiedene Stellungen gebracht werden kann. In einer ersten Stellung ist die Platte 11 in eine "Einfüllstellung" gebracht, in welcher das Loch 20 an seiner Oberseite einer Zuführvorrichtung für frische Kaffeepulvermengen gegenüberliegt. Diese Zuführvorrichtung für Kaffeepulver umfasst insbesondere eine Hülse 21, welche oberhalb der Platte 11 angeordnet ist und sich im Wesentlichen senkrecht nach oben erstreckt, und einen Dosiertrichter 25, dessen unteres Ende von oben über einen Teil seiner Länge in den Innenraum der Hülse 21 hineinragt, sodass ein Zwischenraum zwischen der Aussenseite des Dosiertrichters 25 und der Innenseite der Hülse 21 besteht. Durch den Dosiertrichter 25 und die Hülse 21 kann Kaffeepulver in die Bohrung 20 der Platte 11 gefüllt werden, falls sich die Platte 11 in der ersten Stellung befindet. Die Hülse 21 weist an ihrem oberen Ende eine unsymmetrische Ausweitung 24 auf, welche als Gleitfläche für das Kaffeepulver dient, welches aus dem Dosiertrichter 25 zugeführt werden kann. Diese Ausweitung 24 der Hülse 21 ermöglicht es, dass im oberen Bereich der Hülse 25 genügend Platz zur Verfügung steht, sodass einerseits das untere Ende des Dosiertrichters 25 über einen Teil seiner Länge von oben in den Innenraum der Hülse 21 ragen kann und ausserdem neben dem Dosiertrichter 25 genügend Platz vorhanden ist, um einen Kolben 26 neben dem Dosiertrichter 25 von oben durch die Hülse 21 in der Längsrichtung der Hülse 25 zu führen und dabei eine in die Hülse 21 eingefüllte Menge Kaffeepulver im Loch 20 in vertikaler Richtung zu einer vorgepressten Tablette 45 aus frischen Kaffeepulver zusammenzupressen. Wenn die Platte 11 in die zweite Stellung gebracht ist, befindet sich das Loch 20 in einer Position, in welcher sich die Oberseite des Lochs 20 unmittelbar unter einem in vertikaler Richtung bewegbaren Filterkolben 32 befindet, welcher u.a. eine Leitung 35 zum Zuführen von Warmwasser umfasst, und sich die Unterseite des Lochs 20 unmittelbar über einem in vertikaler Richtung bewegbaren Filterkolben 31 befindet, welcher u.a. eine Leitung 135 zum Abführen eines Kaffeegetränks (Kaffeeaufguss) umfasst. Wenn sich die Platte 11 in der zweiten Stellung befindet und zudem bereits mit zusammengedrücktem Kaffeepulver (in Form einer Tablette 45) gefüllt wurde, können der Filterkolben 31 und der Filterkolben 32 in vertikaler Richtung gegen die Platte 11 gedrückt werden, sodass das Loch 20 zusammen mit den Filterkolben 31 und 32 eine "Brühkammer" bildet, welche oben durch den Brausefilter 33 und unten durch den Brausefilter 133 begrenzt ist. In dieser Situation kann folglich warmes Wasser von oben über Leitung 35 und den Brausefilter 33 in das Loch 20 eingelassen werden, um das im Loch 20 befindliche frische Kaffeepulver (Tablette 45) zu brühen. Entsprechend kann gebrühter Kaffee über den Brausefilter 133 und die Leitung 135 nach unten abfliessen. Nach Beendigung der Herstellung eines Getränks aus gebrühtem Kaffee auf die vorstehend genannte Art kann die Platte 11 in die erste Stellung zurückgebracht werden. Die vorgepresste Tablette 45 bildet nach dem Brühen mit warmen Wasser eine "ausgelaugte Tablette 43", welche aufgesaugtes Wasser enthält und eine relativ kompakte und feste Masse bildet, welche das Loch 20 ausfüllt und zunächst im Loch 20 fest sitzt. Wenn die Platte 11 nach der Herstellung eines Getränks aus gebrühtem Kaffee wieder in die erste Stellung gebracht wird, ist das Loch 20 demnach mit einer ausgelaugten Tablette 43 ausgefüllt, welche das Loch 20 verschliesst. Zur Herstellung eines weiteren Getränks aus gebrühtem Kaffee kann nun in dieser ersten Stellung der Platte 11 wieder frisches Kaffeepulver über den Dosiertrichter 25 in die Hülse 21 gefüllt werden. Das derart eingefüllte frische Pulver sammelt sich dann auf der im Loch 20 befindlichen ausgelaugten Tablette 43. Anschliessend kann das eingefüllte frische Pulver mithilfe des Kolbens 25 nach unten zusammengedrückt werden. Dabei wird die ausgelaugte Tablette 43 nach unten aus dem Loch 20 gefördert und es entsteht im Loch 20 aus dem eingefüllten frischen Pulver eine neue vorgepresste Tablette 45 aus frischem Pulver, welche nun das Loch 20 ausfüllt und auf der unteren Seite von dem zuvor aus dem Loch 20 herausgeförderten ausgelaugten Tablette 43 begrenzt ist.

Die in DE 19 03 859 A1 offenbarte Maschine hat u.a. den Nachteil, dass zumindest ein Teil des frischen Kaffeepulvers, welches zum Befüllen der Bohrung 20 durch den Dosiertrichter in die Hülse 21 eingefüllt wird, insbesondere im Bereich der Ausweitung 24 der Hülse 21 an der Innenwand der Hülse 21 haften bleibt und die Hülse 21 gegebenenfalls beim Einfüllen des Kaffeepulvers elektrostatisch aufgeladen wird (bedingt durch eine elektrostatische Aufladung des zugeführten Kaffeepulvers) . Der Teil des Pulvers, welcher an der Hülse 21 haften bleibt, kann bei wiederholter Zubereitung von Kaffeegüssen mit Feuchtigkeit (insbesondere in Form von Wasserdampf, welcher nach Zubereitung eines Kaffeegusses aus der ausgelaugten Tablette 43 entweichen und an der Innenwand der Hülse 21 kondensieren kann) in Berührung kommen und sich infolge dieser Feuchtigkeit zu einer Masse verbinden, welche an der Innenwand der Hülse 21, insbesondere im Bereich der Ausweitung 24, fest haftet. Dies hat zur Folge, dass sich insbesondere im Bereich der Ausweitung 24 der Hülse 21 immer mehr Kaffeepulver sammelt, welches an der Innenwand der Hülse 21 fest haftet. Es besteht deshalb die Gefahr, dass nach einer Mehrzahl von Zubereitungen von Kaffeegüssen die Hülse 21 verstopft und demzufolge eine weitere Zufuhr von Kaffeepulver aus dem Dosiertrichter 25 verhindert wird. Eine elektrostatische Aufladung der Hülse 21 durch das an der Innenwand der Hülse 21 haftende Pulver hat weiterhin den nachteiligen Effekt, dass zusätzliches durch den Dosiertrichter 25 zugeführtes Kaffeepulver von der Hülse 21 elektrostatisch abgestossen wird und aufgrund dieser elektrostatischen Abstossung derart abgelenkt wird, dass es den Dosiertrichter 25 zumindest teilweise nach oben verlässt. Letzteres führt zu Ablagerungen von Kaffeepulver ausserhalb der Hülse 21 und somit infolge des warm-feuchten Klimas beim Kaffeebezug ebenfalls zu hygienischen Problemen.

Der vorliegenden Erfindung liegt daher die Aufgabe zugrunde, eine Brüheinheit für eine Kaffeemaschine anzugeben, bei welcher die hygienischen Verhältnisse verbessert sind.

Die Aufgabe wird gelöst durch eine Brüheinheit gemäss den Merkmalen des unabhängigen Patentanspruches 1.

Insbesondere wird die Aufgabe gelöst durch eine Brüheinheit für eine Kaffeemaschine, wobei die Brüheinheit eine mittels einer Befülleinrichtung mit gemahlenem Kaffeepulver befüllbare Brühkammer aufweist, wobei die Brühkammer eine Befüllöffnung zum Einfüllen des Kaffeepulvers in einer Befüllrichtung aufweist, wobei oberhalb der Befüllöffnung ein sich nach ausserhalb der Brühkammer in Befüllrichtung erstreckender Überstand angeordnet ist, wobei die Befülleinrichtung einen Austrittsbereich aufweist, welcher eine Austrittsöffnung für das Kaffeepulver und eine sich entlang der Austrittsöffnung erstreckende, die Austrittsöffnung begrenzende Seitenwand umfasst, und wobei der Überstand von einer Wand gebildet ist, welche sich entlang einer geschlossenen, sich um den Austrittsbereich der Befülleinrichtung erstreckende Kurve erstreckt und eine innere Umfangsfläche aufweist, welche eine nach oben und unten offene Durchgangsöffnung des Überstands begrenzt und derart beschaffen ist, dass der Austrittsbereich der Befülleinrichtung unter Ausbildung eines Zwischenraums zwischen der der inneren Umfangsfläche des Überstands und der Seitenwand des Austrittsbereichs derart in die Durchgangsöffnung des Überstands eingeführt ist, dass der Überstand die Austrittsöffnung des Austrittsbereichs im Wesentlichen vollständig umgrenzt und der Überstand die Seitenwand des Austrittsbereichs nicht berührt.

Gemäss der Erfindung sind der Überstand und der Austrittsbereich der Befülleinrichtung derart relativ zueinander angeordnet, dass in der Befülleinrichtung bereitgestelltes Kaffeepulver von der Austrittsöffnung des Austrittsbereichs aus direkt durch die Durchgangsöffnung des Überstands und die Befüllöffnung in die Brühkammer fällt, ohne beim Fallen durch die Durchgangsöffnung an die innere Umfangsfläche des Überstands zu stossen.

Die Vorteile der erfindungsgemässen Lösung liegen auf der Hand. Oberhalb der Befüllöffnung der Brühkammer ist also ein Überstand vorgesehen, welcher sich - bei entsprechender Befüll-Schwenkposition des Brühzylinders der Brüheinheit - in die Befüllrichtung erstreckt, d. h. in der Regel in Richtung des Austrittsbereichs eines Mahltrichters, welcher als Befülleinrichtung dient.

Die Erfindung geht von der Beobachtung aus, dass gemahlenes Kaffeepulver, welches zum Befüllen der Brühkammer einer Brüheinheit in der Befülleinrichtung bereitgestellt wird, in der Regel elektrostatisch geladen sein kann. Dies gilt insbesondere für frisch gemahlenes Kaffeepulver: Beim Mahlen von Kaffeebohnen in einem konventionellen Mahlwerk entsteht häufig ein Mahlgut aus zerkleinerten Partikeln (Kaffeepulver bzw. Pulverkörner), welche relativ stark elektrostatisch aufgeladen sein können, wobei die elektrostatische Aufladung der einzelnen Partikel von konstruktiven Einzelheiten des Mahlwerks (z.B. dem Werkstoff der zum Zerkleinern der Kaffeebohnen verwendeten Mahlelemente) und/oder von Einzelheiten des Mahlvorgangs (z.B. von der Geschwindigkeit, mit welcher die Mahlelemente zum Zerkleinern der Kaffeebohnen relativ zu den jeweiligen Kaffeebohnen bewegt werden), abhängen können. Diese elektrostatische Aufladung des Mahlguts kann beim Befüllen der Brühkammer mit Kaffeepulver die Bewegung einzelner Partikel des Mahlguts auf ihrem Weg von der Austrittsöffnung der Befülleinrichtung in die Brühkammer beeinflussen. Hierbei können mehrere Effekte eine Rolle spielen und die Bewegung der einzelnen Partikel des Mahlguts auf unterschiedliche Weise beeinflussen. Einerseits kann das Mahlgut eine elektrostatische Aufladung einzelner Bereiche der Brüheinheit bewirken, wobei die elektrostatisch aufgeladenen Bereiche der Brüheinheit wiederum die Bewegung elektrostatisch aufgeladener Partikel des Mahlguts, welche die Befülleinrichtung durch die Austrittöffnung verlassen, beeinflussen. Weiterhin sammelt sich beim Befüllen der Brühkammer mehr und mehr Mahlgut aus elektrostatisch aufgeladenen Partikeln. Demnach entsteht beim Befüllen der Brühkammer mit einer vorgegebenen Menge Kaffeepulver eine Wechselwirkung zwischen elektrostatisch geladenem Kaffeepulver, welches sich zu einem bestimmten Zeitpunkt während des Befüllens bereits in der Brühkammer befindet, und elektrostatisch geladenem Kaffeepulver, welches zu einem späteren Zeitpunkt von der Austrittsöffnung der Befülleinrichtung der Brühkammer zugeführt werden soll. Diese Wechselwirkung ist insbesondere bestimmt durch eine elektrostatische Abstossung von Partikeln, welche gleichartig elektrostatisch geladen sind. Diese Wechselwirkung kann insbesondere dann besonders stark ausgeprägt sein, wenn die Brühkammer bereits zumindest teilweise mit (elektrostatisch geladenem) Kaffeepulver gefüllt ist. Letzteres kann bewirken, dass aus der Austrittsöffnung fallendes (elektrostatisch geladenes) Kaffeepulver aufgrund einer elektrostatischen Abstossung von anderem elektrostatisch geladenen Kaffeepulver, welches sich bereits in der Brühkammer befindet, unter Umständen nicht in der Brühkammer, sondern ausserhalb der Brühkammer landet und somit zu einer Verschmutzung der Brüheinheit beitragen kann.

Wenn in der Befülleinrichtung Kaffeepulver bereitgestellt ist, welches elektrostatisch geladen ist, dann hat dies in der Regel den Effekt, dass der Austrittsbereich der Befülleinrichtung und insbesondere die Seitenwand der Befülleinrichtung, welche die Austrittsöffnung der Befülleinrichtung begrenzen, relativ stark elektrostatisch geladen werden kann.

Im Unterschied zu den aus dem Stand der Technik bekannten Brüheinheiten ist nun vorgesehen, dass dieser Austrittsbereich der Befülleinrichtung, in der Regel also der Austrittsbereich des Mahltrichters unterhalb des Mahlwerkes, in den Bereich des Überstandes eingeführt ist, und zwar derart, dass ein Zwischenraum zwischen dem sich in Befüllrichtung erstreckenden Überstand und der Seitenwand des Austrittsbereiches ausgebildet wird und der Überstand die Seitenwand des Austrittsbereichs nicht berührt. Unter diesen Umständen kann - falls in der Befülleinrichtung elektrostatisch geladenes Kaffeepulver bereitgestellt wird - die Seitenwand des Austrittsbereiches der Befülleinrichtung elektrostatisch geladen sein, ohne dass dies zu einer elektrostatischen Aufladung der Überstandes führen würde.

Dadurch, dass der Überstand und der Austrittsbereich der Befülleinrichtung derart relativ zueinander angeordnet sind, dass das in der Befülleinrichtung bereitgestellte Kaffeepulver von der Austrittsöffnung des Austrittsbereichs aus direkt durch die Durchgangsöffnung des Überstands und die Befüllöffnung in die Brühkammer fällt, ohne beim Fallen durch die Durchgangsöffnung an die innere Umfangsfläche des Überstands zu stossen, wird ausserdem erreicht, dass das aus der Austrittsöffnung austretende Kaffeepulver die Brühkammer durch die Durchgangsöffnung des Überstands erreicht, ohne mit der Wand des Überstands in Kontakt zu geraten und ohne entlang der inneren Umfangsfläche des Überstands zu gleiten. Dies bewirkt einerseits, dass das durch die Durchgangsöffnung fallende Kaffeepulver den Überstand nicht unmittelbar elektrostatisch aufladen kann. Weiterhin wird verhindert, dass das durch die Durchgangsöffnung fallende Kaffeepulver unmittelbar in der Durchgangsöffnung des Überstands bzw. an der inneren Umfangsfläche des Überstands haften bleibt.

Die Ausbildung des Überstands bewirkt weiterhin, dass beim Befüllen der Brühkammer mit einer vorgegebenen Menge Kaffeepulver unerwünschte Einflüsse der Wechselwirkung zwischen elektrostatisch geladenem Kaffeepulver, welches sich zu einem bestimmten Zeitpunkt während des Befüllens bereits in der Brühkammer befindet, und elektrostatisch geladenem Kaffeepulver, welches zu einem späteren Zeitpunkt von der Austrittsöffnung der Befülleinrichtung der Brühkammer zugeführt werden soll, insbesondere dann drastisch reduziert werden, wenn die Brühkammer bereits zumindest teilweise mit elektrostatisch geladenem Kaffeepulver gefüllt ist. Wird, wenn die Brühkammer bereits zumindest teilweise mit elektrostatisch geladenem Kaffeepulver gefüllt ist, weiteres Kaffeepulver durch die Austrittsöffnung der Befülleinrichtung nachgefüllt, so kann dies den Effekt haben, dass zumindest ein Teil der in die Brühkammer eingefüllten Pulverkörner aufgrund der elektrostatischen Abstossung zwischen verschiedenen Pulverkörnen aus der Brühkammer gestossen werden und auf diese Weise veranlasst werden, die Brühkammer durch die Befüllöffnung der Brühkammer zu verlassen. Die Pulverkörner, welche auf diese Weise die Brühkammer verlassen, kollidieren allerdings in der Regel mit dem Überstand oder mit dem Austrittsbereich der Befülleinrichtung und fallen wieder in die Brühkammer zurück. Der Überstand trägt wesentlich dazu bei, dass Pulverkörner beim Befüllen der Brühkammer tatsächlich in der Brühkammer (und nicht ausserhalb der Brühkammer) landen, selbst dann, wenn das Kaffeepulver relativ stark elektrostatisch geladen ist. Hierdurch wird das Ausbilden von Ablagerungen von Kaffeepulver ausserhalb der Brühkammer, welche gegebenenfalls ein Hygieneproblem darstellen können, effektiv vermindert oder komplett unterbunden.

Das gegebenenfalls elektrostatisch geladene Mahlgut wird also nach dem Mahlvorgang nicht von der Oberseite der Brüheinheit elektrostatisch angezogen, d. h. vor allem bei grösserer Menge von Mahlgut verteilen sich zum Ende des Einfüllvorganges hin die geladenen Pulverkörner nicht unkontrolliert. Vielmehr vermeidet der Überstand weitgehend, dass diese Pulverteilchen auf der Oberseite der Brüheinheit zu liegen kommen.

Die Tatsache, dass ein Zwischenraum zwischen dem Überstand und einer Seitenwand des Austrittsbereiches ausgebildet wird, ist noch aus einem weiteren Grund in diesem Zusammenhang wesentlich. Es hat sich nämlich gezeigt, dass durch das Vorsehen eines derartigen Zwischenraums zwischen dem Überstand und der Seitenwand des Austrittsbereichs die Wirkung der erfindungsgemässen Brüheinheit dahingehend verbessert werden kann, dass Ablagerungen von Mahlgut (Kaffeepulver) weiter reduziert werden.

Der Zwischenraum dient hierbei zum einen dazu, beim Einfüllen des Mahlgutes entstehende Verwirbelungen vorteilhaft so zu beeinflussen, dass sich nur wenige oder keine Ablagerungen auf der Oberseite der Brüheinheit bilden. Insbesondere dient der Zwischenraum hierbei auch zum Abführen von Luft während des Einfüllvorganges.

Wenn der Brühzylinder der Brüheinheit nach einem erfolgten Brühvorgang wieder in die Befüllposition geschwenkt wird, so dass die Befüllöffnung der Brühkammer wieder mit dem Überstand fluchtet, müssen ausserdem feuchtwarme Dämpfe abgeleitet werden, welche bei einer Stauung ebenfalls zu einer unvorteilhaften Ablagerungsbildung (ausserhalb der Brühkammer, beispielsweise in der Durchgangsöffnung des Überstands) führen können. Daher hat der Zwischenraum des Weiteren die Funktion, diese feuchtwarmen Dämpfe abzuleiten.

Insbesondere bei einer symmetrischen Ausbildung sowohl von Austrittsbereich als auch von Überstand, besonders vorzugsweise bei komplementärer Formgebung dieser Teile, ist der Zwischenraum auf die innere Umfangsfläche des Überstandes bezogen an jeder Stelle in etwa gleich gross. Mit anderen Worten: Im Zwischenraum weist dann der Austrittsbereich vom Überstand einen gleichförmigen Abstand auf.

In einer Ausführungsform der Erfindung ist beispielsweise vorgesehen, dass die Befülleinrichtung mindestens einen Mahltrichter aufweist, an dessen unterem Ende der Austrittsbereich ausgebildet ist. Hierbei weist der Austrittsbereich einen Öffnungsquerschnitt auf, der geringer ist als der Öffnungsquerschnitt des Überstandes (d.h. der Querschnitt der Durchgangsöffnung des Überstands), und zwar derart, dass im Zwischenraum der Austrittsbereich vom Überstand einen Abstand zwischen 1 mm und 20 mm aufweist. Diese Bereichsangabe ist hierbei insbesondere derart zu verstehen, dass der Zwischenraum auf die innere Umfangsfläche des Überstandes bezogen an jeder Stelle einen im Wesentlichen einheitlichen Abstand aufweist, wobei dieser Abstand in Abhängigkeit von den jeweiligen Anwendungsbedingungen in einem Bereich zwischen 1 mm und 20 mm liegt. Es hat sich gezeigt, dass innerhalb dieses Bereiches des Abstandes vorteilhafte dahingehende Wirkungen erzielt werden, dass das Bilden von unerwünschten Ablagerungen wirkungsvoll unterbunden wird.

Gemäss einem weiteren Aspekt der Erfindung ist vorgesehen, dass der Überstand integral mit der Brüheinheit ausgebildet ist. Hierdurch ergibt sich der besondere Vorteil, dass durch die damit gewonnene Stabilität der Überstand sehr beständig ist.

Alternativ kann der Überstand jedoch auch abnehmbar von der Brüheinheit ausgebildet sein. Dies bietet sich insbesondere an, um bestehende Brüheinheiten nachträglich mit dem Überstand auszurüsten. Insbesondere ist hierfür an dem Überstand eine Schraub-, Schnapp- oder Klippseinrichtung zum wahlweisen Ausstatten der Brüheinheit mit dem Überstand vorgesehen. Vorzugsweise ist in diesem Fall an der Brüheinheit eine entsprechende komplementäre Schraub-, Schnapp- bzw. Klippseinrichtung vorgesehen. Durch eine derartige Ausgestaltung ist eine besonders gute Flexibilität gegeben.

Gemäss einem Aspekt der Erfindung ist es vorgesehen, dass der Überstand von einer Wand (im Folgenden auch "Pulverkragen" genannt) gebildet ist, welche sich entlang einer geschlossenen, sich um den Austrittsbereich der Befülleinrichtung verlaufende Kurve erstreckt und eine geschlossene innere Umfangsfläche aufweist. Der Überstand kann beispielsweise zylinderförmig ausgebildet sein und eine geschlossene innere Umfangsfläche aufweisen. In diesem Fall erstreckt sich der Überstand mit im Wesentlichen kreisförmigem Querschnitt von der Befüllöffnung der Brühkammer aus in Befüllrichtung, d. h. in Richtung des Austrittsbereichs der Befülleinrichtung. Durch eine derartige Zylinder- oder Rohrform ist ein besonders einfacher Aufbau gewährleistet. Der Querschnitt des Überstandes bzw. der Querschnitt der inneren Umfangsfläche des Überstandes kann allerdings auch eine beliebige andere (nicht kreisförmige) Form aufweisen.

Die innere Umfangsfläche des Überstandes kann eine Hochglanzoberfläche aufweisen bzw. zumindest bereichsweise als Hochglanzoberfläche ausgebildet sein. In diesem Fall ist die innere Umfangsfläche besonders glatt und hat dadurch den Vorteil, dass eine Anlagerung von Kaffeepulver an der inneren Umfangsfläche weitgehend vermieden wird.

Gemäss einem weiteren Aspekt der Erfindung ist es vorgesehen, dass der Überstand von einer Wand gebildet ist, welche ein oberes Ende aufweist und eine Wandhöhe zwischen 5 mm und 50 mm aufweist. Insbesondere im Zusammenspiel mit dem oben genannten vorteilhaften Bereich des Zwischenraumes bietet ein derartiger Überstand mit einer solchen Wandhöhe besonders zuverlässige Ergebnisse bei der Vermeidung von unerwünschten Ablagerungen.

In diesem Zusammenhang kann es vorgesehen sein, dass die Wandstärke der Wand des Überstands (die Wandstärke des Pulverkragens) zwischen 0.5 mm und 3 mm liegt. Hierdurch ist bei minimalem Materialaufwand eine besonders zuverlässige Wirkung hinsichtlich der Vermeidung von Ablagerungen gegeben.

Um Ablagerungen von Kaffeepulver am oberen Ende des Überstands zu vermeiden bzw. weitestgehend zu reduzieren, ist es vorteilhaft, wenn die Wandstärke der den Überstand bildenden Wand möglichst gering ist. Eine effektive Vermeidung bzw. Reduktion von Ablagerungen von Kaffeepulver am oberen Ende des Überstands wird bereits erreicht, wenn die den Überstand bildende Wand an ihrem oberen Ende - zumindest in einem Wandabschnitt, welcher sich bezüglich des oberen Endes der Wand über eine Höhe von 0.5 mm bis 5 mm erstreckt - eine Wandstärke von 0.5 mm bis 1 mm aufweist.

Auch die Konstruktion des Austrittsbereichs der Befülleinrichtung ist von Einfluss darauf, ob Kaffeepulver beim Einfüllen in die Brühkammer in die Brühkammer fällt oder beispielsweise aufgrund einer elektrostatischen Anziehung zwischen elektrostatisch geladenen Kaffeepulverkörnern und dem Austrittsbereichs der Befülleinrichtung beim Fallen abgelenkt wird und schliesslich ausserhalb der Brühkammer landet. Um zu erreichten, dass das Kaffeepulver möglichst zielgenau in die Brühkammer fällt, ist es vorteilhaft, wenn die Austrittsöffnung für das Kaffeepulver von einer Begrenzungswand (z.B. der Seitenwand des Austrittsbereichs) begrenzt ist, welche zumindest in der Nähe der Austrittsöffnung eine möglichst geringe Wandstärke aufweist. Dies reduziert den Einfluss einer elektrostatischen Anziehung zwischen elektrostatisch geladenen Kaffeepulverkörnern und dem Austrittsbereichs der Befülleinrichtung erheblich.

In diesem Zusammenhang ist es beispielsweise zweckmässig, wenn die Austrittsöffnung des Austrittsbereichs an einem unteren Ende der Seitenwand des Austrittsbereichs angeordnet ist, wobei diese Seitenwand an ihrem unteren Ende - zumindest in einem Wandabschnitt der Seitenwand, welcher sich bezüglich des unteren Endes der Seitenwand über eine Höhe von 0.5 mm bis 5 mm erstreckt - eine Wandstärke von 0.5 mm bis 1 mm aufweist.

Gemäss einem weiteren Aspekt der Erfindung weist die Befülleinrichtung ferner mindestens eine Führungseinrichtung auf. Diese Führungseinrichtung ist insbesondere als Führungsblech ausgebildet, wobei diese mindestens eine Führungseinrichtung dazu ausgelegt ist, das einzufüllende Kaffeepulver der Befüllöffnung der Brühkammer passiv zuzuleiten. Ein derartiges Führungsblech, welches in vorteilhafter Weise unmittelbar am Mahlwerksausgang befestigt ist, und welches vorzugsweise den Mahlwerkaustrittskanal teilweise oder ganz überdeckt, ist dahingehend vorteilhaft, dass geladene Mahlgutteilchen, d. h. geladene Pulverteilchen und dergleichen, beim Verlassen des Mahlwerksaustrittskanals zusätzlich an diesem Führungsblech, d. h. an dieser Führungseinrichtung abprallen und in Richtung der Brühkammer geleitet werden.

Gemäss einem weiteren Aspekt der Erfindung ist es vorgesehen, dass der Austrittsbereich der Befülleinrichtung mit einer vorab festgelegten Eindringtiefe in den Bereich des Überstandes eingeführt ist. Dabei ist der Austrittsbereich der Befülleinrichtung in die Durchgangsöffnung des Überstands mit einer Eindringtiefe eingeführt, welche - bezogen auf das obere Ende der Wand - mindestens 1 mm beträgt und nicht grösser als die Wandhöhe ist. Vorzugsweise beträgt die Eindringtiefe 1 mm bis 20 mm.

Der Ausdruck "Bereich des Überstandes" ist hierbei so zu verstehen, dass bei beispielsweise zylinderförmiger Ausgestaltung des Überstandes dieser Bereich ab der Durchdringung einer gedachten Deckelplatte des Überstandes beginnt, welche auf dem Rand des Überstandes aufliegt. Die Eindringtiefe ist dann derart definiert, dass sie den Abstand zwischen diesem Bereich der gedachten Deckelplatte zur Austrittsöffnung der Befülleinrichtung, d. h. zur Austrittsöffnung des Mahltrichters oder dergleichen angibt.

In einer Kaffeemaschine kann diese Position, in welcher der Austrittsbereich des Mahltrichters um vorzugsweise 1 mm bis 20 mm in den Bereich des Überstandes eingeführt ist, durch die ortsfeste Anordnung der Brüheinheit relativ zum Mahlwerk gewährleistet werden.

Es ist bereits ab einer derart geringen Eindringtiefe mittels der erfindungsgemässen Lösung möglich, ein Bilden von Ablagerungen beim Befüllen der Brühkammer der Brüheinheit wirkungsvoll zu verringern oder komplett zu vermeiden.

Gemäss einem weiteren Aspekt der Erfindung ist es vorgesehen, eine Kaffeemaschine mit mindestens einem Mahlwerk und mit einer erfindungsgemässen Brüheinheit zu versehen. Die Brüheinheit weist dann einen verschwenkbar ausgebildeten Brühzylinder auf, innerhalb dessen die Brühkammer ausgebildet ist. Es ist ferner eine Abstreifeinrichtung am Überstand vorgesehen, welche dazu ausgelegt ist, bei der Bewegung des Brühzylinders überschüssiges gemahlenes Kaffeepulver abzustreifen.

Diese zusätzliche Abstreifeinrichtung ist aus einem weichen Material, beispielsweise aus einem Gummimaterial oder Silikon oder dergleichen gebildet. Vorzugsweise ist sie am Überstand vorgesehen, genauer an der unteren Kante des Überstandes, an welcher entlang der Brühzylinder bewegt wird.

Beim Verschwenken des Brühzylinders, beispielsweise beim Verschwenken in die Befüllposition oder aus der Befüllposition in eine Brühposition oder dergleichen dient die Abstreifeinrichtung dann dazu, mögliche Ablagerungen an der oberen Seite des Brühzylinders abzustreifen. Hierdurch kann die Bildung von unerwünschten Ablagerungen weiter reduziert werden.

Bei einer weiteren Ausgestaltung der Kaffeemaschine ist die Bewegung des Brühzylinders eine relativ zum Überstand erfolgende Verschwenkbewegung. Da eine solche Verschwenkbewegung bei gängigen Kaffeemaschinen ohnehin stattfinden muss, um den Brühzylinder zwischen seiner Befüllstellung und den weiteren für den Brühvorgang benötigten Stellungen zu bewegen, erfolgt bei einer derartigen vorteilhaften Ausgestaltung das Abstreifen überschüssigen gemahlenen Kaffeepulvers automatisch und damit auf besonders einfache Weise.

Im Folgenden werden Ausführungsformen der erfindungsgemässen Lösung anhand einer Zeichnung näher erläutert.

Es zeigen:
- Fig. 1:: eine perspektivische Seitenansicht auf eine Brüheinheit für eine Kaffeemaschine gemäss der ersten Ausführungsform der Erfindung;
- Fig. 2:: eine perspektivische seitliche Draufsicht auf die Brüheinheit aus Fig. 1 in einer Befüllposition relativ zu einem Mahlwerk mit Befülleinrichtung;
- Fig. 3:: eine seitliche Schnittansicht auf einen Ausschnitt der Brüheinheit gegenüber dem Mahlwerk aus Fig. 2;
- Fig. 4:: eine seitliche Schnittansicht der erfindungsgemässen Brüheinheit gegenüber dem Mahltrichter aus Fig. 2;
- Fig. 5:: eine perspektivische Seitenansicht analog zu Fig. 1 auf die erfindungsgemässe Brüheinheit gemäss einer zweiten Ausführungsform der Erfindung;
- Fig. 6:: eine seitliche Schnittansicht auf eine Brüheinheit relativ zu einem Mahlwerk mit Befülleinrichtung gemäss einer dritten Ausführungsform der Erfindung;
- Fig. 7:: eine Abdeckung der Brühkammer der Brüheinheit gemäss Fig. 4 mit einem integrierten Überstand in einer seitlichen Schnittansicht wie in Fig. 4, jedoch vergrössert, und
- Fig. 8:: den Mahltrichter gemäss Fig. 4 in einer seitlichen Schnittansicht wie in Fig. 4, jedoch vergrössert.

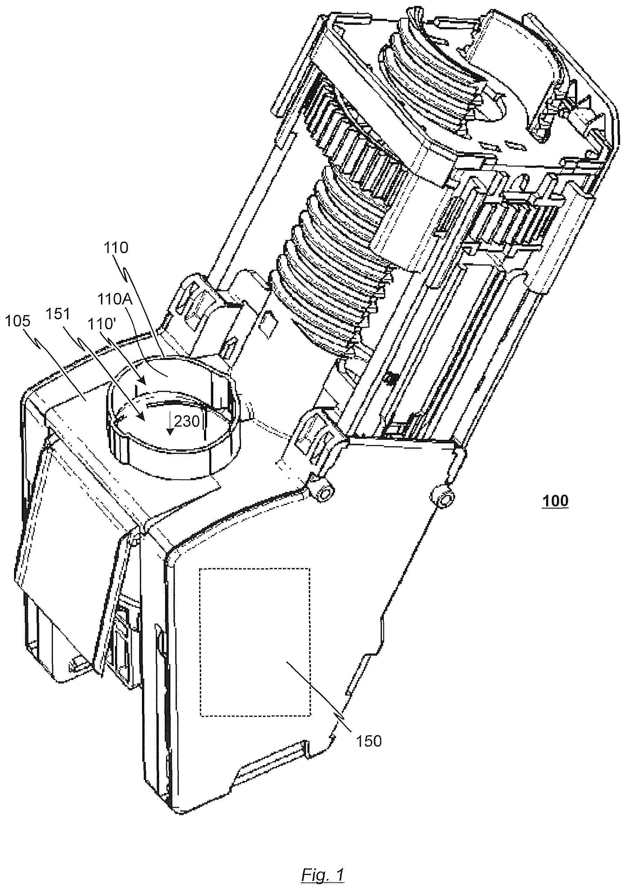

Fig. 1 zeigt eine perspektivische Seitenansicht auf eine erfindungsgemässe Brüheinheit 100 gemäss einer ersten Ausführungsform der Erfindung.

Die Brüheinheit 100 weist hierbei einen von einem Gehäuse umgebenen Brühzylinder mit einer darin ausgebildeten Brühkammer 150 auf, an deren Oberseite eine Befüllöffnung 151 ausgebildet ist. Wie später im Zusammenhang mit den nachfolgenden Figuren noch erläutert wird, ist innerhalb der Brüheinheit der Brühzylinder bei einer entsprechenden Anordnung innerhalb einer Kaffeemaschine gegenüber einem Mahlwerk derart durch Verschwenkbewegungen oder dergleichen positionierbar, dass durch die Befüllöffnung 151 gemahlenes Kaffeepulver zugeführt werden kann. Die in Fig. 1 vom Gehäuse der Brüheinheit verdeckte Brühkammer 150 ist lediglich zur besseren Verdeutlichung mit einer unterbrochenen Linie angedeutet. In der Darstellung gemäss Fig. 1 gibt ein mit dem Bezugszeichen 230 bezeichneter gerader Pfeil eine "Befüllrichtung" der Brühkammer 150 an, d.h. es ist davon auszugehen, dass Mahlgut, welches in der Befüllrichtung 230 durch die Befüllöffnung 151 fällt, die Brühkammer 150 erreicht.

An der Befüllöffnung 151 der Brühkammer 150, genauer gesagt oberhalb davon, ist nun erfindungsgemäss ein Überstand 110 vorgesehen, welcher in der ersten Ausführungsform annähernd zylinderförmig ausgebildet ist, d. h. einen im Wesentlichen kreisförmigen Querschnitt (in einer Ebene senkrecht zur Befüllrichtung 230) aufweist. Wie ersichtlich, ist der Überstand 110 im vorliegenden Beispiel als eine sich entlang einer geschlossenen (im Wesentlichen kreisförmigen) Kurve erstreckende Wand ("Pulverkragen") mit einer geschlossenen inneren Umfangsfläche ausgebildet.

Ausgehend von der Befüllöffnung 151 erstreckt sich dieser Überstand 110 mit im Wesentlichen senkrechter umlaufender Seitenwand von der Befüllöffnung 151 weg. Im vorliegenden Beispiel ist der Überstand 110 an einem Abschnitt 105 eines Gehäuses der Brüheinheit 100 angeordnet, welcher eine obere Abdeckung (im Folgenden "obere Abdeckung 105") der Brühkammer 150 bildet. Wie ersichtlich weist die obere Abdeckung 105 eine mit der Befüllöffnung 151 korrespondierende (nach oben und unten offene) Durchgangsöffnung 110' auf, wobei sich der Überstand 110 entlang eines Randes dieser Durchgangsöffnung 110' erstreckt.

Es sei darauf hingewiesen, dass die Form des Querschnitts des Überstands 110 bzw. die Form des Querschnitts der Durchgangsöffnung 110' nicht wesentlich für die vorliegende Erfindung ist. Alternativ wäre es deshalb auch möglich, den Überstand 110 derart auszubilden, dass die Form seines Querschnitts in einer Ebene senkrecht zur Befüllrichtung 230 von der in Fig. 1 dargestellten Form beliebig abweicht.

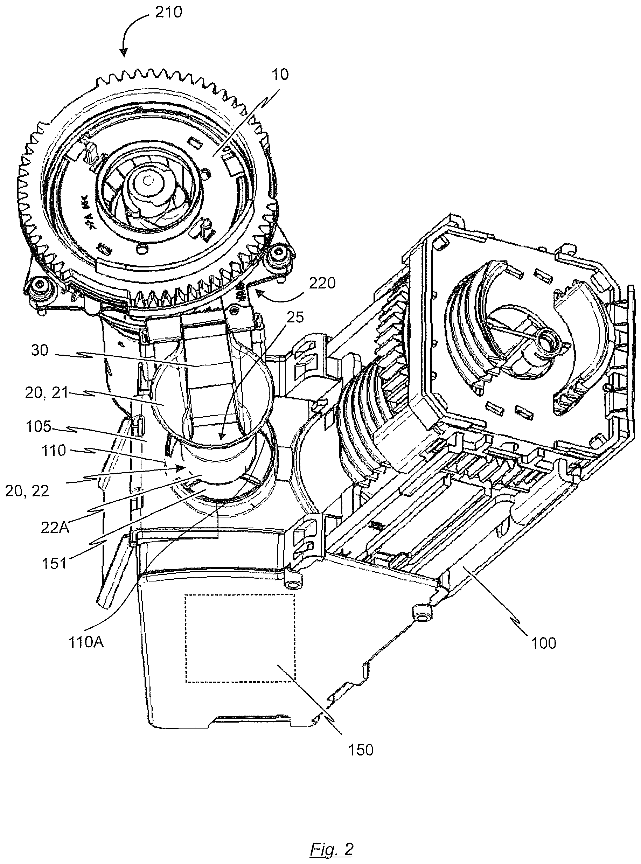

In Fig. 2 ist die Brüheinheit 100 aus Fig. 1 perspektivisch relativ zu einem Mahlwerk 10 in Befüllposition dargestellt. Das Mahlwerk 10 weist eine Zufuhrseite 210 für zu zermahlende geröstete Kaffeebohnen oder dergleichen auf. Weiterhin weist es eine Austrittsseite bzw. Ausgabeseite 220 auf, an welcher ein mit einem Ablenkblech 30 als Führungseinrichtung versehener Mahltrichter 20, der als Befülleinrichtung dient, vorgesehen ist. Der Mahltrichter 20 weist einen konisch zulaufenden Bereich 21 auf, welcher der Ausgabeseite 220 des Mahlwerks 20 zugewandt ist und mit dem Führungsblech 30 versehen ist.

Wie aus der Darstellung in Fig. 2 ersichtlich, verläuft ein Austrittsbereich 22 des Mahltrichters 20 auf die Befüllöffnung 151 der Brühkammer 150 zu, d. h. der Austrittsbereich 22 des Mahltrichters 20 verläuft in Befüllrichtung. Dieser Austrittsbereich 22 mündet in eine Austrittsöffnung 25 des Mahltrichters 20, wobei die Austrittsöffnung 25 mit einem Querschnitt ("Öffnungsquerschnitt") ausgebildet ist, welcher (hinsichtlich seiner Fläche) geringer ist als der Öffnungsquerschnitt des Überstandes 110. Der Öffnungsquerschnitt des Überstandes 110 wiederum ist im Wesentlichen gleich dem Öffnungsquerschnitt der Befüllöffnung 151 der Brühkammer 150 oder kleiner als der Öffnungsquerschnitt der Befüllöffnung 151 der Brühkammer 150. Der Austrittsbereich 22 der Befülleinrichtung 20 umfasst eine sich entlang der Austrittsöffnung 25 erstreckende, die Austrittsöffnung 25 begrenzende Seitenwand 22A.

Der Überstand 110 ist von einer Wand gebildet, welche sich entlang einer geschlossenen, sich um den Austrittsbereich 22 der Befülleinrichtung 20 erstreckenden Kurve erstreckt und eine innere Umfangsfläche 110A aufweist, welche die Durchgangsöffnung 110' begrenzt.

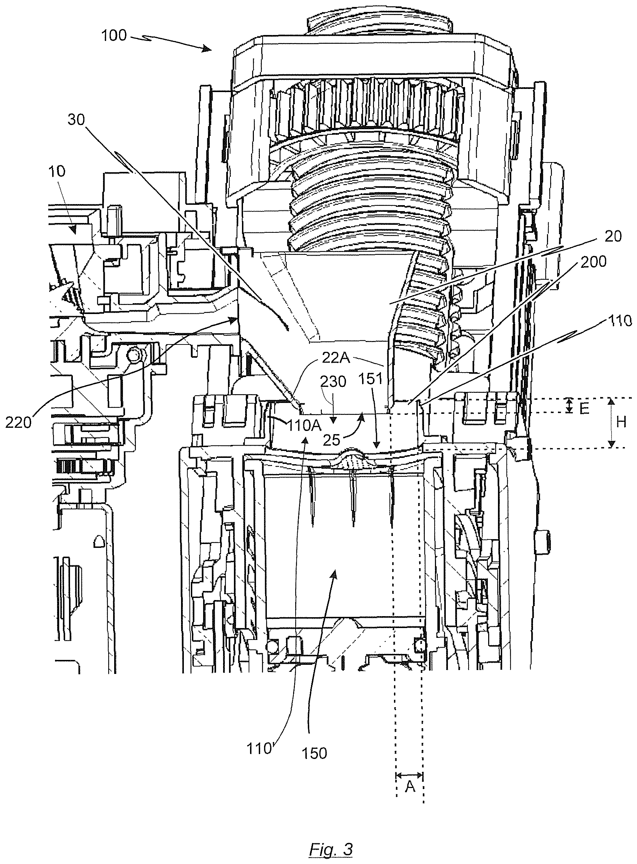

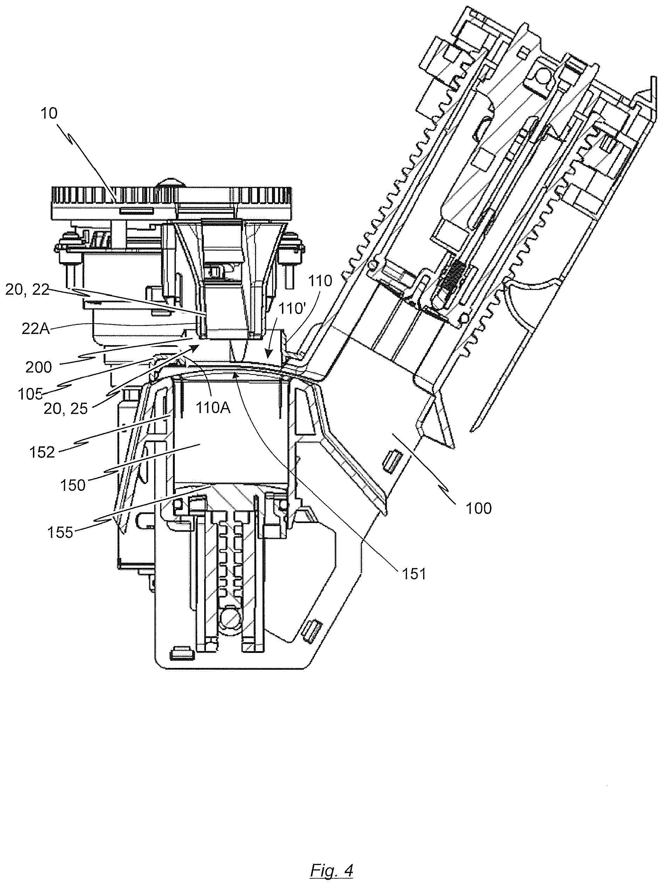

Wie aus den seitlichen Schnittansichten der Fig. 3 und 4 ersichtlich ist, dringt dieser Austrittsbereich 22 des Mahltrichters 20 in den Bereich des Überstandes 110 ein, und zwar derart, dass die Austrittsöffnung 25 des Mahltrichters 20, die diesen Austrittsbereich 22 des Mahltrichters 20 abschliesst, von der Wand des Überstandes 110 im Wesentlichen vollständig unter Ausbildung eines Zwischenraums 200 umgrenzt wird. Der Zwischenraum 200 ist zwischen der inneren Umfangsfläche 110A des Überstands 110 und der Seitenwand 22A des Austrittsbereichs 22 ausgebildet, wobei der Austrittsbereich 22 derart in die Durchgangsöffnung 110' des Überstands 110 eingeführt ist, dass der Überstand 110 die Austrittsöffnung 25 des Austrittsbereichs 22 im Wesentlichen vollständig umgrenzt und der Überstand 110 die Seitenwand 22A des Austrittsbereichs 22 nicht berührt.

Wie insbesondere aus Fig. 2 und 3 ersichtlich, sind der Überstand 110 und der Austrittsbereich 22 der Befülleinrichtung 20 derart relativ zueinander angeordnet, dass in der Befülleinrichtung 20 bereitgestelltes Kaffeepulver von der Austrittsöffnung 25 des Austrittsbereichs 22 aus direkt durch die Durchgangsöffnung 110' des Überstands 110 und die Befüllöffnung 151 in die Brühkammer 150 fällt, ohne beim Fallen durch die Durchgangsöffnung 110' an die innere Umfangsfläche 110A des Überstands 110 zu stossen. Das in der Befülleinrichtung 20 bereitgestellte Kaffeepulver fällt dabei - ausgehend von der Austrittsöffnung 25 - im Wesentlichen entlang der Befüllrichtung 230 in einem Abstand zur inneren Umfangsfläche 110A des Überstands 110.

Der Überstand 110 selbst ist als Wand (Pulverkragen) mit einer Wandhöhe H zwischen 5 mm und 50 mm ausgebildet.

Das untere Ende des Austrittsbereichs 22 des Mahltrichters 20, d. h. die Austrittsöffnung 25 des Mahltrichters 20, ist in der Befüllposition in einen von der Wand des Überstands 110 umgrenzten inneren Bereich 110' des Überstands 110 mit einer Eindringtiefe E eingeführt, welche - bezogen auf das obere Ende der Wand - mindestens 1 mm beträgt und nicht grösser als die Wandhöhe H ist. Die Eindringtiefe E beträgt vorzugsweise etwa 1 mm bis 20 mm.

Der Abstand A zwischen der Seitenwand des Austrittsbereichs 22 und der Wand des Überstands 110 ist im vorliegenden Beispiel an jeder Stelle des Umfangs im Wesentlichen gleich und beträgt zwischen 1 mm und 20 mm. Der Abstand A im Zwischenraum sowie die Eindringtiefe E des Austrittsbereichs 22 des Mahltrichters 20 stellen hierbei sicher, dass ein insgesamt grosser Luftspalt ausgebildet wird. Dieser Luftspalt ist hinsichtlich seiner Abmessungen so dimensioniert, dass ein Verdrängungs-Luftstrom, welcher beim Einfüllen von Mahlgut in die Brühkammer 150 durch Verdrängen von Luft mittels des aus dem Mahltrichter 20 in die Brühkammer 150 rieselndes Mahlguts in der Brühkammer 150 erzeugt wird, effizient und schnell über den Luftspalt aus der Brüheinheit 100 heraus geführt wird, sodass ein stossweiser Anstieg des Luftdrucks in der Brühkammer 150 weitgehend vermieden werden kann. Letzteres reduziert die Gefahr, dass Mahlgut (Kaffeepulver) die Brühkammer 150 beim Einfüllen des Mahlguts in die Brühkammer 150 verlassen könnte, erheblich, sodass die Bildung von Ablagerungen von Mahlgut ausserhalb der Brühkammer 150 wirkungsvoll verringert wird.

Dieser Verdrängungs-Luftstrom und damit einhergehende Verwirbelungen des Mahlguts treten bei herkömmlichen Brüheinheiten verstärkt auf, wenn die Brühkammer 150 im Brühzylinder 152 mit der maximal möglichen Mahlgutmenge befüllt werden soll. Durch das Vorsehen des Überstandes 110 und dessen besonderen Anordnung und Ausgestaltung, insbesondere durch das Vorsehen des Zwischenraums 200, werden die Verwirbelungen reduziert. Infolgedessen werden auch unerwünschte Ablagerungen auf der Oberseite der Brüheinheit weiter reduziert.

Die jeweiligen vorteilsweise schräg ausgebildeten Kanten sowohl des Austrittsbereichs des Mahltrichters 20, d. h. der Austrittsöffnung 25 des Mahltrichters 20, als auch des Überstandes 110 sind zur Minimierung des elektrostatischen Aufladungseffektes relativ dünn ausgebildet, d. h. mit Wandstärken zwischen 0.5 mm und 3 mm.
Zudem wird der Verdrängungs-Luftstrom gezielt nach oben abgeleitet.

Durch eine derartige Ausgestaltung kann die Wirkung, nämlich dass unerwünschte Ablagerungen minimiert werden, verbessert werden.

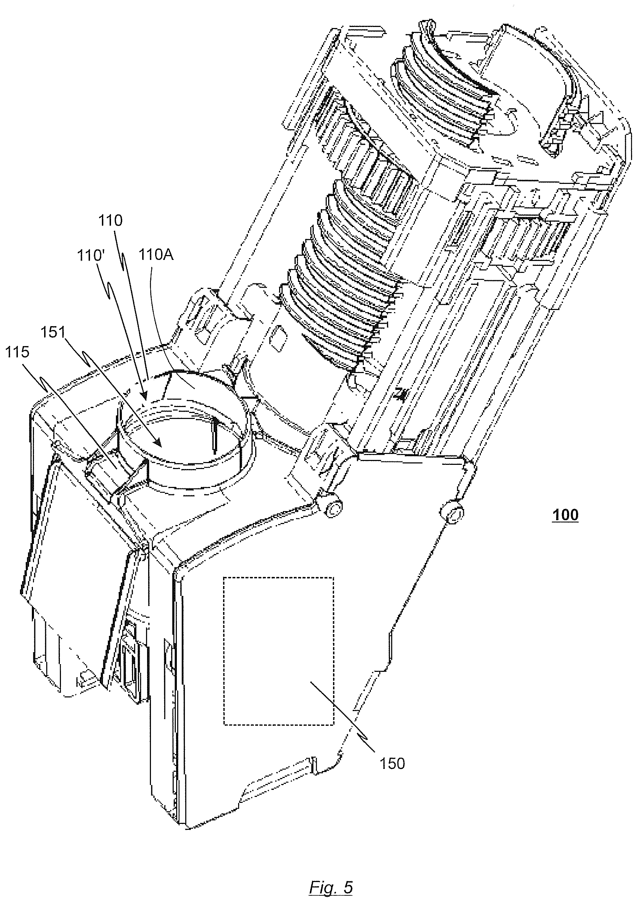

Fig. 5 zeigt eine seitliche perspektivische Ansicht analog zu Fig. 1. Bei dieser in Fig. 5 dargestellten zweiten Ausführungsform der Erfindung ist der Überstand 110 mittels einer Klippseinrichtung 115 abnehmbar an der Brüheinheit 100 befestigt, sodass auch eine vorhandene Brüheinheit nachträglich mit dem Überstand 110 ausgestattet werden kann. Natürlich wäre es auch denkbar, anstelle der Klippseinrichtung 115 andere Befestigungsmittel zu verwenden, um den Überstand 110 abnehmbar an der Brüheinheit 100 zu befestigen, beispielsweise eine Schraubeinrichtung oder eine Schnappeinrichtung.

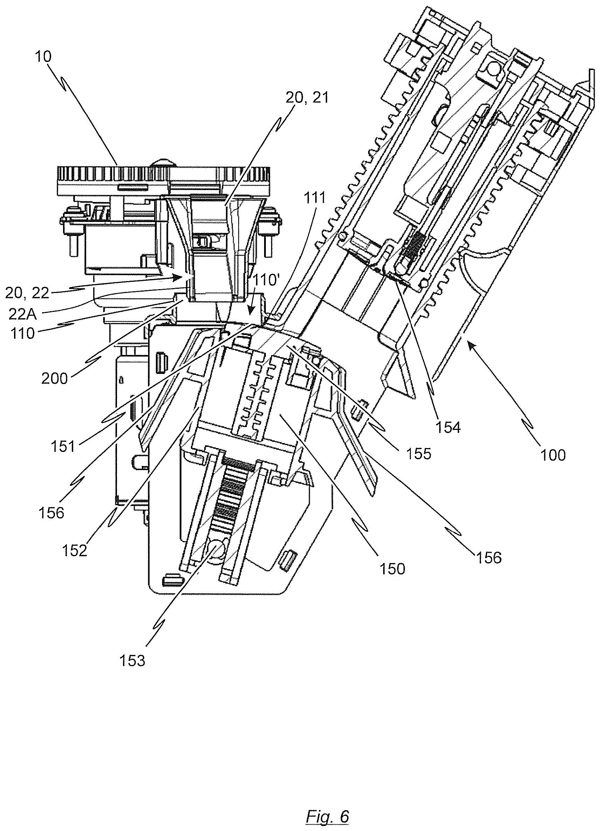

Fig. 6 ist eine seitliche Schnittansicht auf eine Brüheinheit relativ zu einem Mahlwerk mit Befülleinrichtung gemäss einer dritten Ausführungsform der Erfindung.

Innerhalb der dort gezeigten Brüheinheit 100 ist ein um eine Schwenkachse 153 verschwenkbar ausgebildeter Brühzylinder 152 angeordnet, der seinerseits die mit dem Mahlgut befüllbare Brühkammer 150 aufweist. In der in Fig. 6 gezeigten Verschwenkposition befindet sich der Brühzylinder 152 auf halbem Wege zwischen einer Brüh-Verschwenkstellung, in welcher die Befüllöffnung 151 der Brühkammer 150 mit einem Brühkolben 154 fluchten würde, und einer Einfüllstellung, in welcher die Befüllöffnung 151 mit dem wiederum vorgesehenen Überstand 110 und mit dem Austrittsbereich 22 des wiederum vorgesehenen Mahltrichters 20 fluchten würde.

Der in den Figuren dargestellte Brühzylinder 152 weist einen die Brühkammer 150 begrenzenden Boden 155 auf, welcher im Brühzylinder 152 in Richtung der Längsachse des Brühzylinders 152 bewegbar ist. Bei dem in Fig. 6 gezeigten Brühzylinder 152 ist dessen Boden 155 in eine Austreib- oder Auswurfposition gefahren, in welcher verbrauchtes Mahlgut, zu einem Kaffeekuchen gepresst, aus einer in der Nähe des Brühkolbens 154 angeordneten Auswurföffnung der Brüheinheit 100 ausgeworfen werden kann.

Bei der gezeigten Brüheinheit 100 gemäss der dritten Ausführungsform der Erfindung ist der Überstand 110 wie bei der in Fig. 1 dargestellten ersten Ausführungsform integral mit der Brüheinheit 100 ausgebildet. Zusätzlich zur ersten Ausführungsform ist nun am Überstand 110 an dessen unterem Ende eine Abstreifeinrichtung 111 aus einem Elastomer vorgesehen, welche bei einer Verschwenkbewegung des Brühzylinders 152 um die Schwenkachse 153 und damit einer Verschwenkbewegung der Befüllöffnung 151 der Brühkammer 150 gegenüber dem Überstand 110 überschüssiges Kaffeepulver am oberen Rand des Brühzylinders 152 oder am Boden 155 abstreift und so unerwünschte Mahlgutablagerungen weiter verringert. Das von der Abstreifeinrichtung 111 abgestreifte Kaffeepulver kann an einer ausserhalb der Brühkammer 150 angeordneten Ableitrutsche 156, welche beispielsweise am Brühzylinder 152 befestigt sein kann, nach unten fallen und sich gegebenenfalls in einem unterhalb des Brühzylinders 152 angeordneten Sammelbehälter oder in einer Auffangschale (in den Figuren nicht dargestellt) sammeln.

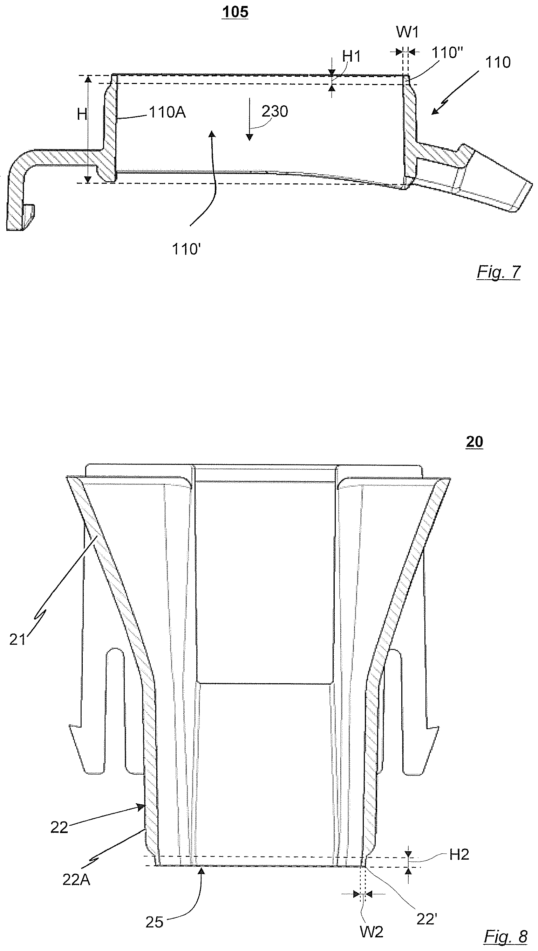

Fig. 7 zeigt eine weitere Ausführungsform eines Überstands 110, bei welcher der Überstand 110 aus einer Wand gebildet ist, deren Wandstärke entlang der Befüllrichtung 230 variiert ist. Im Falle der Fig. 7 ist der Überstand 110 in die obere Abdeckung 105 der Brühkammer 150 der Brüheinheit 100 integriert, wie in der Ausführungsform gemäss Fig. 4. Der Überstand 110 bzw. die obere Abdeckung 105 ist im vorliegenden Fall in einer seitlichen Schnittansicht dargestellt (wie in Fig. 4). Im vorliegenden Beispiel ist der Überstand 110 aus einer Wand gebildet, deren Wandstärke zum oberen Ende hin verjüngt ist, sodass die Wand am oberen Ende des Überstands 110 möglichst dünn ist. Auf diese Weise wird gewährleistet, dass der Überstand 110 als Ganzes einerseits eine hohe mechanische Stabilität aufweist kann und andererseits (wegen seiner geringen Wandstärke am oberen Ende des Überstands 110) der Einfluss elektrostatischer Aufladungseffekte auf Kaffeepulver am oberen Ende des Überstands 110 drastisch reduziert ist. Um den Einfluss elektrostatischer Aufladungseffekte auf Kaffeepulver deutlich zu reduzieren, ist es beispielsweise zweckmässig, dass die den Überstand 110 bildende Wand an ihrem oberen Ende - zumindest in einem Wandabschnitt 110'', welcher sich bezüglich des oberen Endes der Wand über eine Höhe H1 von 0.5 mm bis 5 mm erstreckt - eine Wandstärke W1 von 0.5 mm bis 1 mm aufweist (wie in Fig. 7 angedeutet).

Fig. 8 zeigt eine weitere Ausführungsform eines als Befülleinrichtung dienenden Mahltrichters 20, dessen Austrittsbereich 22 als eine sich entlang der Austrittsöffnung 25 des Austrittsbereichs 22 erstreckende, die Austrittsöffnung 25 begrenzende Seitenwand 22A ausgebildet ist, wobei die Austrittsöffnung 25 an einem unteren Ende der Seitenwand 22A angeordnet ist. Im Falle der Ausführungsform gemäss Fig. 8 ist die Wandstärke der Seitenwand 22A in Richtung auf die Austrittsöffnung 25 verjüngt, sodass die Seitenwand 22A am unteren Ende des Austrittsbereichs 22 bzw. an der Austrittsöffnung 25 möglichst dünn ist. Der Mahltrichter 20 ist im vorliegenden Fall in einer seitlichen Schnittansicht dargestellt (wie in Fig. 4). Auf diese Weise wird gewährleistet, dass der Mahltrichter 20 als Ganzes einerseits eine hohe mechanische Stabilität aufweist kann und andererseits (wegen seiner geringen Wandstärke am unteren Ende des Austrittsbereichs 22 bzw. an der Austrittsöffnung 25) der Einfluss elektrostatischer Aufladungseffekte auf Kaffeepulver am unteren Ende des Austrittsbereichs 22 bzw. an der Austrittsöffnung 25 drastisch reduziert ist. Um den Einfluss elektrostatischer Aufladungseffekte auf Kaffeepulver deutlich zu reduzieren, ist es beispielsweise zweckmässig, dass die Seitenwand 22A des Austrittsbereichs 22 an ihrem unteren Ende - zumindest in einem Wandabschnitt 22' der Seitenwand 22A, welcher sich bezüglich des unteren Endes der Seitenwand 22 A über eine Höhe H2 von 0.5 mm bis 5 mm erstreckt - eine Wandstärke W2 von 0.5 mm bis 1 mm aufweist (wie in Fig. 8 dargestellt).

Die Durchgangsöffnung 110' des Überstands 110 ist in den in den Figuren dargestellten Ausführungsformen jeweils derart ausgebildet, dass die innere Umfangsfläche 110A im Wesentlichen parallel zur Befüllrichtung 230 bzw. parallel zu einer Vertikalen angeordnet ist. Es sei darauf hingewiesen, dass diese Form der Durchgangsöffnung 110' für die Erfindung nicht wesentlich ist. Die innere Umfangsfläche 110A kann beispielsweise zur Befüllrichtung 230 bzw. zu einer Vertikalen geneigt sein, beispielsweise auch derart, dass die Durchgangsöffnung 110' sich nach oben oder unten verjüngt.

## Patentansprüche

1. Brüheinheit (100) für eine Kaffeemaschine, wobei die Brüheinheit (100) eine mittels einer Befülleinrichtung (20) mit gemahlenem Kaffeepulver befüllbare Brühkammer (150) aufweist, wobei die Brühkammer (150) eine Befüllöffnung (151) zum Einfüllen des Kaffeepulvers in einer Befüllrichtung (230) aufweist, wobei oberhalb der Befüllöffnung (151) ein sich nach ausserhalb der Brühkammer (150) in Befüllrichtung (230) erstreckender Überstand (110) angeordnet ist,
wobei die Befülleinrichtung (20) einen Austrittsbereich (22) aufweist, welcher eine Austrittsöffnung (25) für das Kaffeepulver und eine sich entlang der Austrittsöffnung (25) erstreckende, die Austrittsöffnung (25) begrenzende Seitenwand (22A) umfasst,
wobei der Überstand (110) von einer Wand gebildet ist, welche sich entlang einer geschlossenen, sich um den Austrittsbereich (22) der Befülleinrichtung (20) erstreckenden Kurve erstreckt und eine innere Umfangsfläche (110A) aufweist, welche eine nach oben und unten offene Durchgangsöffnung (110') des Überstands (110) begrenzt und derart beschaffen ist, dass der Austrittsbereich (22) der Befülleinrichtung (20) unter Ausbildung eines Zwischenraums (200) zwischen der inneren Umfangsfläche (110A) des Überstands (110) und der Seitenwand (22A) des Austrittsbereichs (22) derart in die Durchgangsöffnung (110') des Überstands (110) eingeführt ist, dass der Überstand (110) die Austrittsöffnung (25) des Austrittsbereichs (22) im Wesentlichen vollständig umgrenzt und der Überstand (110) die Seitenwand (22A) des Austrittsbereichs (22) nicht berührt,
**dadurch gekennzeichnet, dass**
der Überstand (110) und der Austrittsbereich (22) der Befülleinrichtung (20) derart relativ zueinander angeordnet sind, dass in der Befülleinrichtung (20) bereitgestelltes Kaffeepulver von der Austrittsöffnung (25) des Austrittsbereichs (22) aus direkt durch die Durchgangsöffnung (110') des Überstands (110) und die Befüllöffnung (151) in die Brühkammer (150) fällt, ohne beim Fallen durch die Durchgangsöffnung (110') an die innere Umfangsfläche (110A) des Überstands (110) zu stossen.

2. Brüheinheit (100) nach Anspruch 1, wobei die Befülleinrichtung (20) mindestens einen Mahltrichter aufweist, an dessen unterem Ende der Austrittsbereich (22) ausgebildet ist, wobei der Austrittsbereich (22) einen Öffnungsquerschnitt aufweist, der derart geringer ist als der Öffnungsquerschnitt des Überstandes (110), dass im Zwischenraum (200) der Austrittsbereich (22) vom Überstand (110) einen Abstand (A) zwischen 1 mm und 20 mm aufweist.

3. Brüheinheit (100) nach Anspruch 1 oder 2, wobei der Überstand (110) integral mit der Brüheinheit (100) ausgebildet ist.

4. Brüheinheit (100) nach Anspruch 1 oder 2, wobei der Überstand (110) abnehmbar von der Brüheinheit (100) ausgebildet ist und insbesondere mit einer Schraub-, Schnapp- oder Klippseinrichtung (115) zum wahlweisen Ausstatten der Brüheinheit (100) versehen ist, wobei vorzugsweise an der Brüheinheit (100) eine entsprechende komplementäre Schraub-, Schnapp- bzw. Klippseinrichtung vorgesehen ist.

5. Brüheinheit (100) nach Anspruch 1, wobei die innere Umfangsfläche (110A) eine Hochglanzoberfläche aufweist.

6. Brüheinheit (100) nach einem der Ansprüche 1-5, wobei die Wand des Überstands (110) ein oberes Ende aufweist und eine Wandhöhe (H) zwischen 5 mm und 50 mm hat.

7. Brüheinheit (100) nach Anspruch 6, wobei der Austrittsbereich (22) der Befülleinrichtung (20) in die Durchgangsöffnung (110') des Überstands (110) mit einer Eindringtiefe (E) eingeführt ist, welche - bezogen auf das obere Ende der Wand - mindestens 1 mm beträgt und nicht grösser als die Wandhöhe (H) ist.

8. Brüheinheit (100) nach Anspruch 6 oder 7, wobei die den Überstand (110) bildende Wand an ihrem oberen Ende - zumindest in einem Wandabschnitt (110''), welcher sich bezüglich des oberen Endes der Wand über eine Höhe (H1) von 0.5 mm bis 5 mm erstreckt - eine Wandstärke (W1) von 0.5 mm bis 1 mm aufweist.

9. Brüheinheit nach einem der vorhergehenden Ansprüche, wobei die Austrittsöffnung (25) des Austrittsbereichs (22) an einem unteren Ende der Seitenwand (22A) angeordnet ist, wobei diese Seitenwand (22A) an ihrem unteren Ende - zumindest in einem Wandabschnitt (22') der Seitenwand (22A), welcher sich bezüglich des unteren Endes der Seitenwand (22A) über eine Höhe (H2) von 0.5 mm bis 5 mm erstreckt - eine Wandstärke (W2) von 0.5 mm bis 1 mm aufweist.

10. Brüheinheit (100) nach einem der vorhergehenden Ansprüche, wobei die Befülleinrichtung (20) ferner mindestens eine Führungseinrichtung (30), insbesondere ein Führungsblech, aufweist, wobei die mindestens eine Führungseinrichtung (30) dazu ausgelegt ist, das einzufüllende Kaffeepulver der Befüllöffnung (151) der Brühkammer (150) passiv zuzuleiten.

11. Kaffeemaschine mit mindestens einem Mahlwerk (10) und mit einer Brüheinheit (100) nach einem der vorhergehenden Ansprüche, wobei die Brüheinheit (100) einen Brühzylinder (152) aufweist, in welchem die Brühkammer (150) ausgebildet ist, wobei der Brühzylinder (152) gegenüber dem Überstand (110) beweglich ausgebildet ist, wobei eine Abstreifeinrichtung (111) vorgesehen ist, welche vorzugsweise am Überstand (110) vorgesehen ist, und welche dazu ausgelegt ist, bei der Bewegung des Brühzylinders (152) überschüssiges gemahlenes Kaffeepulver abzustreifen.

12. Kaffeemaschine nach Anspruch 11, wobei die Bewegung des Brühzylinders (152) eine Verschwenkbewegung innerhalb der Brüheinheit (100) ist.

13. Kaffeemaschine nach Anspruch 11 oder 12, wobei ausserhalb der Brühkammer (150) eine Ableitrutsche (156) angeordnet ist, welche dazu ausgelegt ist, mittels der Abstreifeinrichtung (111) abgestreiftes Kaffeepulver in einen Sammelbehälter oder eine Auffangschale zu leiten.

## Claims

1. Brewing unit (100) for a coffee machine, wherein the brewing unit (100) has a brewing chamber (150) which can be filled with ground coffee powder by means of a filling device (20), wherein the brewing chamber (150) comprises a filling opening (151) for filling the coffee powder in a filling direction (230), wherein arranged above the filling opening (151) is a projection (110) extending to outside of the brewing chamber (150) in the filling direction (230),
wherein the filling device (20) has an outlet area (22) which comprises an outlet opening (25) for the coffee powder and a side wall (22A) extending along the outlet opening (25) and delimiting the outlet opening (25),
wherein the projection (110) is formed by a wall which extends along a closed curve running around the outlet area (22) of the filling device (20) and has an inner circumferential surface (110A) which delimits a through opening (110'), which is open at the top and bottom, of the projection (110) and is configured in such a way that the outlet area (22) of the filling device (20) is introduced into the through opening (110') of the projection (110), forming an intermediate space (200) between the inner circumferential surface (110A) of the projection (110) and the side wall (22A) of the outlet area (22), in such a way that the projection (110) essentially completely surrounds the outlet opening (25) of the outlet area (22) and the projection (110) is not in contact with the side wall (22A) of the outlet area (22),
**characterised in that**
the projection (110) and the outlet area (22) of the filling device (20) are arranged relative to each other in such a way that coffee powder provided in the filling device (20) falls from the outlet opening (25) of the outlet area (22) directly through the through opening (110') of the projection (110) and the filling opening (151) into the brewing chamber (150) without hitting the inner circumferential surface (110A) of the projection (110) when falling through the through opening (110').

2. Brewing unit (100) according to claim 1, wherein the filling device (20) has at least one grinding funnel at the lower end of which the outlet area (22) is formed, wherein the outlet area (22) has an opening cross-section which is smaller than the opening cross-section of the projection (110) in such a way that in the intermediate space (220) the outlet area (22) is at a distance (A) of between 1 mm and 20 mm from the projection (110).

3. Brewing unit (100) according to claim 1 or 2, wherein the projection (110) formed integrally with the brewing unit (100).

4. Brewing unit (100) according to claim 1 or 2, wherein the projection (110) is designed to be detachable from the brewing unit (100) and, in particular, is provided with a screw, snap or clip-type device (115) for the optional equipping of the brewing unit (100), wherein preferably a complementary screw, snap or clip-type device is provided on the brewing unit (100).

5. Brewing unit (100) according to claim 1, wherein the inner circumferential surface (110A) has a high-gloss surface.

6. Brewing unit (100) according to any one of claims 1-5 wherein the wall of the projection (110) has an upper end and a wall height (H) of between 5 mm and 50 mm.

7. Brewing unit (100) according to claim 6, wherein the outlet area (22) of the filling device (20) is introduced into the through opening (110') of the projection (110) with a penetration depth (E) which - in relation to the upper end of the wall - is at least 1 mm and no greater than the wall height (H).

8. Brewing unit (100) according to claim 6 or 7, wherein the wall, forming the projection (110), has at its upper end - at least in a wall section (110'') which in relation to the upper end of the wall extends over a height (H1) of 0.5 mm to 5 mm - a wall thickness (W1) of 0.5 to 1 mm.

9. Brewing unit according to any one of the preceding claims, wherein the outlet opening (25) of the outlet area (22) is arranged at a lower end of the side wall (22A), wherein at its lower end - at least in a wall section (22') of the side wall (22A), which in relation to the lower end of the side wall (22A) extends over a height (H2) of 0.5 mm to 5 mm - this side wall (22A) has a wall thickness (W2) of 0.5 mm to 1 mm.

10. Brewing unit (100) according to any one of the preceding claims, wherein the filling device (20) also has at least one guide device (30), more particularly a guide plate, wherein the at least one guide device (30) is designed to passively supply the coffee powder to be filled to the filling opening (151) of the brewing chamber (150).

11. Coffee machine with at least one grinder (10) and with a brewing unit (100) according to any one of the preceding claims, wherein the brewing unit (100) has a brewing cylinder (152), in which the brewing chamber (150) is formed, wherein the brewing cylinder (152) is movable vis-à-vis the projection (110), wherein a skimming device (111) is provided, which is preferably provided on the projection (110) and which is designed to skim off excess ground coffee powder during the movement of the brewing cylinder (152).

12. Coffee machine according to claim 11, wherein the movement of the brewing cylinder (152) is a pivoting movement within the brewing unit (100).

13. Coffee machine according to claim 11 or 12 wherein arranged outside the brewing chamber (150) is a discharge slide (156), which is designed to convey coffee powder skimmed off by means of the skimming device (111) into a collection container or collecting dish.

## Revendications

1. Unité de brassage (100) pour une machine à café, l'unité de brassage (100) comportant une chambre de brassage (150) remplissable avec du café en poudre moulu au moyen d'un dispositif de remplissage (20), la chambre de brassage (150) comportant une ouverture de remplissage (151) pour remplir du café en poudre dans une direction de remplissage (230), une saillie (110) s'étendant vers l'extérieur de la chambre de brassage (150) en direction du remplissage (230) étant disposée au-dessus de l'ouverture de remplissage (151),
le dispositif de remplissage (20) comportant une zone de sortie (22), laquelle comprend une ouverture de sortie (25) pour le café en poudre et une paroi latérale (22A) s'étendant le long de l'ouverture de sortie (25), limitant l'ouverture de sortie (25),
la saillie (110) étant formée par une paroi, laquelle s'étend le long d'une courbe fermée s'étendant autour de la zone de sortie (22) du dispositif de remplissage (20) et comportant une surface périphérique intérieure (110A), laquelle limite une ouverture de passage (110') ouverte vers le haut et le bas de la saillie (110) et étant constituée de telle sorte que la zone de sortie (22) du dispositif de remplissage (20) est introduite dans l'ouverture de passage (110') de la saillie (110) en formant un compartiment intermédiaire (200) entre la surface périphérique intérieure (110A) de la saillie (110) et la paroi latérale (22A) de la zone de sortie (22) de telle manière que la saillie (110) entoure pour l'essentiel complètement l'ouverture de sortie (25) de la zone de sortie (22) et que la saillie (110) ne touche pas la paroi latérale (22A) de la zone de sortie (22),
**caractérisée en ce que**
la saillie (110) et la zone de sortie (22) du dispositif de remplissage (20) sont disposées l'un par rapport à l'autre de telle manière que du café en poudre préparé dans le dispositif de remplissage (20) tombe de l'ouverture de sortie (25) de la zone de sortie (22) directement à travers l'ouverture de passage (110') de la saillie (110) et l'ouverture de remplissage (151) dans la chambre de brassage (150) sans heurter la surface périphérique intérieure (110A) de la saillie (110) lors de la chute à travers l'ouverture de passage (110').

2. Unité de brassage (100) selon la revendication 1, le dispositif de remplissage (20) comportant au moins une trémie de broyage à l'extrémité inférieure de laquelle est constituée la zone de sortie (22), la zone de sortie (22) comportant une section d'ouverture qui est plus faible que la section d'ouverture de la saillie (110) de telle sorte que la zone de sortie (22) comporte dans le compartiment intermédiaire (200) depuis la saillie (110) une distance (A) entre 1 mm et 20 mm.

3. Unité de brassage (100) selon la revendication 1 ou 2, la saillie (110) étant constituée de manière intégrale avec l'unité de brassage (100).

4. Unité de brassage (100) selon la revendication 1 ou 2, la saillie (110) étant constituée démontable de l'unité de brassage (100) et étant notamment dotée d'un dispositif à vis, à encliquetage ou à agrafage (115) pour un équipement facultatif de l'unité de brassage (100), un dispositif à vis, à encliquetage ou à agrafage correspondant complémentaire étant prévu de préférence sur l'unité de brassage (100).

5. Unité de brassage (100) selon la revendication 1, la surface périphérique intérieure (110A) comportant une surface brillante.

6. Unité de brassage (100) selon l'une quelconque des revendications 1 - 5, la paroi de la saillie (110) comportant une extrémité supérieure et ayant une hauteur de paroi (H) entre 5 mm et 50 mm.

7. Unité de brassage (100) selon la revendication 6,
la zone de sortie (22) du dispositif de remplissage (20) étant introduite dans l'ouverture de passage (110') de la saillie (110) à une profondeur d'enfoncement (E), laquelle est au moins d'1 mm, par rapport à l'extrémité supérieure de la paroi, et pas plus grande que la hauteur de paroi (H).

8. Unité de brassage (100) selon la revendication 6 ou 7, la paroi formant la saillie (110) comportant à son extrémité supérieure, une épaisseur de paroi (W1) de 0,5 mm à 1 mm, au moins dans une section de paroi (110''), laquelle s'étend sur une hauteur (H1) de 0,5 mm à 5 mm par rapport à l'extrémité supérieure de la paroi.

9. Unité de brassage selon l'une quelconque des revendications précédentes, l'ouverture de sortie (25) de la zone de sortie (22) étant disposée à une extrémité inférieure de la paroi latérale (22A), cette paroi latérale (22A) comportant à son extrémité inférieure une épaisseur de paroi (W2) de 0,5 mm à 1 mm, au moins dans une section de paroi (22') de la paroi latérale (22A), laquelle s'étend sur une hauteur (H2) de 0,5 mm à 5 mm par rapport à l'extrémité inférieure de la paroi latérale (22A).

10. Unité de brassage (100) selon l'une quelconque des revendications précédentes, le dispositif de remplissage (20) comportant en outre au moins un dispositif de guidage (30), notamment une tôle de guidage, au moins le système de guidage (30) étant conçu pour acheminer passivement le café en poudre à remplir à l'ouverture de remplissage (151) de la chambre de brassage (150).

11. Machine à café avec au moins un mécanisme de broyage (10) et avec unité de brassage (100) selon l'une quelconque des revendications précédentes, l'unité de brassage (100) comportant un cylindre de brassage (152), dans lequel est constituée la chambre de brassage (150), le cylindre de brassage (152) étant constitué mobile par rapport à la saillie (110), un dispositif de raclage (111) étant prévu, lequel est prévu de préférence sur la saillie (110) et lequel est conçu pour râcler du café en poudre moulu excédentaire lors du mouvement du cylindre de brassage (152).

12. Machine à café selon la revendication 11, le mouvement du cylindre de brassage (152) étant un mouvement de pivotement à l'intérieur de l'unité de brassage (100).

13. Machine à café selon la revendication 11 ou 12, une goulotte de dérivation (156) étant disposée en dehors de la chambre de brassage (150), laquelle est conçue pour diriger du café en poudre raclé au moyen du dispositif de raclage (111) dans un bac collecteur ou une coque de réception.
